# EUROPEAN PATENT SPECIFICATION

(11) **EP 4 290 294 B1**
(45) Date of publication and mention of the grant of the patent: **26.08.2026**
(21) Application number: 22810051.7
(22) Date of filing: 14.01.2022
(51) Int. Cl.: G02B 27/01

(54) **OPTICAL APPARATUS AND DISPLAY DEVICE**
OPTISCHE VORRICHTUNG UND ANZEIGEVORRICHTUNG
APPAREIL OPTIQUE ET DISPOSITIF D'AFFICHAGE

(30) Priority: 25.05.2021 CN 202110569358
(43) Date of publication of application: 13.12.2023
(73) Proprietor: Shenzhen Optiark Semiconductor Technologies Limited, Shenzhen, Guangdong 518110 (CN)
(72) Inventor: JIANG, Houqiang, Shenzhen, Guangdong 518110 (CN); ZHU, Yisheng, Shenzhen, Guangdong 518110 (CN)
(74) Representative: Bayramoglu et al.
(86) International application number: PCT/CN2022/072122
(87) International publication number: WO 2022/247313

(56) References cited:
- EP-A1- 3 726 272
- EP-B1- 2 076 813
- WO-A1-2018/202951
- CN-A- 101 103 297
- CN-A- 110 582 716
- CN-A- 110 603 467
- CN-A- 110 764 261
- CN-A- 110 809 730
- CN-A- 113 219 671
- CN-A- 113 253 465
- CN-A- 113 687 512
- US-A1- 2013 250 431
- US-B1- 10 962 787
- US-B1- 9 791 703

## Description

### TECHNICAL FIELD

The present disclosure belongs to the field of waveguide technology, and particularly, to an optical apparatus and a display device.

### BACKGROUND ART

Near-eye display technology is one of the key technologies that must be used in current AR glasses. A near-eye display system is generally composed of an image source and an optical transmission system. An image frame emitted by the image source is transmitted to the human eyes through the optical transmission system. The optical transmission system here is required to have a certain transmittance, so that the wearer can see the external environment while seeing the image frame.

For the optical transmission system in the industry, there are many solutions, for example, the free-space optics, the freeform surface optics, and the display optical waveguide. Among them, the optical waveguide technology has become the mainstream path of major companies due to its characteristics of a large eyebox and being light and thin, which is significantly better than other optical solutions. However, the current optical waveguide can only realize monocular display, and there are problems of high hardware cost and high-power consumption to realize binocular display. US9791703B1 discloses an input-coupler of an optical waveguide. The input-coupler couples light corresponding to the image and having a corresponding FOV into the optical waveguide, and the input-coupler splits the FOV of the image coupled into the optical waveguide into first and second portions by diffracting a portion of the light corresponding to the image in a first direction toward a first intermediate-component, and diffracting a portion of the light corresponding to the image in a second direction toward a second intermediate-component. An output-coupler of the waveguide combines the light corresponding to the first and second portions of the FOV, and couples the light corresponding to the combined first and second portions of the FOV out of the optical waveguide so that the light corresponding to the image and the combined first and second portions of the FOV is output from the optical waveguide. WO2018/202951A1 discloses a display element for a personal display system, a personal display, a method and a use. The display element comprises a lightguide capable of guiding light by total internal reflections, a diffractive in-coupling grating, and a diffractive out-coupling grating. The in- coupling grating is adapted to couple light directed thereto to the lightguide so as to allow propagation of the light to the out-coupling grating. The in-coupling grating is adapted to couple light to the lightguide as at least two diffraction wavefronts and the display element further comprises at least two different exit pupil expander gratings adapted to guide said wavefronts respectively to the out-coupling grating along different paths. US10962787B1 discloses an optical waveguide. The waveguide includes an input diffractive optical element arranged for being aligned with an optical projector for diffracting light beams therefrom, a waveguide substrate n, and an output diffractive optical element. Light beams diffracted by the output diffractive optical element are coupled out of the waveguide substrate towards users' eyes. The output diffractive optical element has an effective area arranged to maintain a constant output flux per unit area therein for providing an uniform image in brightness when the image is being projected out of the waveguide substrate. EP2076813B1 discloses apparatus and method for using a three-dimensional diffractive element (e.g., a 3D diffractive grating) for expanding in one or two dimensions the exit pupil of an optical beam in electronic devices.

### SUMMARY

The present disclosure provides an optical apparatus and a display device to solve the problem that the current optical waveguide only realizes monocular display.

For solving the technical problem mentioned above, the present disclosure proposes an optical apparatus, including a waveguide plate, wherein the waveguide plate is provided with: an entrance pupil grating unit, wherein input light is diffracted by the entrance pupil grating unit to form first left guided light and first right guided light; a left intermediate-expansion-pupil grating unit, located at a left side in a horizontal direction of the entrance pupil grating unit, wherein the first left guided light is diffracted by the left intermediate-expansion-pupil grating unit to form second left guided light; a right intermediate-expansion-pupil grating unit, located at a right side in the horizontal direction of the entrance pupil grating unit, wherein the first right guided light is diffracted by the right intermediate-expansion-pupil grating unit to form second right guided light; a left exit pupil grating unit, located at a lower side in a vertical direction of the left intermediate-expansion-pupil grating unit, wherein the second left guided light is diffracted by the left exit pupil grating unit to form left output light; and a right exit pupil grating unit, located at a lower side in a vertical direction of the right intermediate-expansion-pupil grating unit, wherein the second right guided light is diffracted by the right exit pupil grating unit to form right output light, wherein the left intermediate-expansion-pupil grating unit and the right intermediate-expansion-pupil grating unit are in left-right mirror symmetry about the entrance pupil grating unit, and the left exit pupil grating unit and the right exit pupil grating unit are in left-right mirror symmetry about the entrance pupil grating unit, and directions of the input light, the left output light, and the right output light are consistent. The entrance pupil grating unit has only one grating vector, the left intermediate-expansion-pupil grating unit has only one grating vector, the right intermediate-expansion-pupil grating unit has only one grating vector, the left exit pupil grating unit has only one grating vector, and the right exit pupil grating unit has only one grating vector. The left intermediate-expansion-pupil grating unit and the right intermediate-expansion-pupil grating unit each comprise a plurality of sub-intermediate-expansion-pupil zones, and angles between boundaries of adjacent sub-intermediate-expansion-pupil zones and a horizontal direction are different.

In an embodiment, preferably, the entrance pupil grating unit is a surface relief grating (SRG) or a volumetric holographic grating (VHG), the entrance pupil grating unit is a circle, and its diameter is 2.5 mm to 7 mm, and the grating period of the entrance pupil grating unit is 330 nm to 450 nm.

In an embodiment, preferably, both the left intermediate-expansion-pupil grating unit and the right intermediate-expansion-pupil grating unit are expanding grating structures, wherein in a direction away from the entrance pupil grating unit horizontally, a height of each of the expanding grating structures gradually increases in the vertical direction; and wherein a maximum height of the expanding grating structure in the vertical direction is 2 to 5 times of the diameter of the entrance pupil grating unit, and a width of the expanding grating structure in the horizontal direction is 5 to 10 times of the diameter of the entrance pupil grating unit.

In an embodiment, preferably, each of the expanding grating structures is divided into 5 to 15 sub-intermediate-expansion-pupil zones, and an angle between a dividing line of adjacent sub-intermediate-expansion-pupil zones and the horizontal direction is 20 degrees to 160 degrees; and in a direction away from the entrance pupil grating unit, a diffraction efficiency of each of the sub-intermediate-expansion-pupil zones increases gradually, and the diffraction efficiency of each of the sub-intermediate-expansion-pupil zones is 5% to 95%.

In an embodiment, preferably, both the left exit pupil grating unit and the right exit pupil grating unit are exit pupil grating structures, wherein the exit pupil grating structures are rectangular, heights of the exit pupil grating structures in the vertical direction are 3 to 6 times of the diameter of the entrance pupil grating unit, and widths of the exit pupil grating structures in the horizontal direction are 80% to 95% of the widths of the expanding grating structures.

In an embodiment, preferably, each of the exit pupil grating structures is divided into 5 to 15 sub-exit-pupil zones in the vertical direction, and in a direction vertically away from the entrance pupil grating unit, a diffraction efficiency of each of the sub-exit-pupil zones increases gradually, and the diffraction efficiency of each of the sub-exit-pupil zones is 5% to 95%.

In an embodiment, preferably, the expanding grating structures are quadrangular, four corners of each of the expanding grating structures and four corners of each of the exit pupil grating structures are made into arc structures, wherein curvature radiuses of arcs are 0 mm to 20 mm.

In an embodiment, preferably, a horizontal distance from a center of the left exit pupil grating unit to a center of the right exit pupil grating unit is equal to an interpupillary distance of human eyes, and the interpupillary distance of human eyes is 60 mm to 70 mm; and a vertical distance from the center of the entrance pupil grating unit to the center of the left exit pupil grating unit is 8 mm to 25 mm.

In an embodiment, preferably, with a direction from left to right taken as a reference, a grating vector direction of the entrance pupil grating unit is -1 degree to 1 degree, a grating vector direction of the left intermediate-expansion-pupil grating unit is 30 degrees to 60 degrees, a grating vector direction of the right intermediate-expansion-pupil grating unit is 120 degrees to 150 degrees, a grating vector direction of the left exit pupil grating unit is 88 degrees to 92 degrees, and a grating vector direction of the right exit pupil grating unit is 88 degrees to 92 degrees.

In an embodiment, preferably, in a wave vector space, wave vector zones of the left output light, the right output light, and the input light are coincident, wave vector zones of the first left guided light and the first right guided light, and wave vector zones of the second left guided light and the second right guided light are between a minimum wave vector of total internal reflection and a maximum wave vector of total internal reflection of the waveguide plate, and the wave vector zones of the second left guided light and the second right guided light are coincident.

In an embodiment, preferably, a grating vector of the entrance pupil grating unit is directed to the left, and a sum of grating vectors of the entrance pupil grating unit, the left intermediate-expansion-pupil grating unit, and the left exit pupil grating unit is zero; and the grating vector of the entrance pupil grating unit is directed to the right, and a sum of grating vectors of the entrance pupil grating unit, the right intermediate-expansion-pupil grating unit, and the right exit pupil grating unit is zero.

For solving the technical problems mentioned above, the present disclosure further proposes a display device, which includes a light engine, and the optical apparatus mentioned above, wherein the light engine is configured for generating the input light.

Differing from the prior art, in the optical apparatus of the present disclosure, an entrance pupil grating unit is formed on a waveguide plate, and diffracts input light into left and right guided light by using positive and negative diffraction orders; and left and right symmetrical intermediate-expansion-pupil grating units and left and right symmetrical exit pupil grating units are further formed on the same waveguide plate, so that binocular display can be realized. Since the waveguide plate is a whole and has basic flatness, left and right eyes can achieve binocular fusion without other additional adjustments. Due to the overall left-right symmetrical relationship, color complementarity of images of the left and right eyes is realized, thereby realizing a better color uniformity and a larger field of view (FOV). Better color homogeneity is further achieved by partitioning/dividing of the left and right intermediate-expansion-pupil units and the left and right exit pupil units. Meanwhile, both the positive and negative diffraction orders of the entrance pupil units are utilized, which greatly improves the utilization of the optical energy of the system, and therefore the power consumption of the binocular system is far lower than that of the conventional binocular display scheme.

### BRIEF DESCRIPTION OF DRAWINGS

The above content and other objects, features, and advantages of exemplary embodiments of the present disclosure will become easy to understand by reading the following detailed description with reference to the drawings. In the drawings, several embodiments of the present disclosure are illustrated by way of example but not for limitation, and same or corresponding symbols represent the same or corresponding parts. In the above:
FIG. 1 is a structural schematic diagram of an embodiment of an optical apparatus of the present disclosure;
FIG. 2 is a schematic diagram showing partitioning of grating units of an embodiment of the optical apparatus shown in FIG. 1;
FIG. 3 is a schematic diagram showing vector directions of the grating units of an embodiment of the optical apparatus shown in FIG. 1;
FIG. 4 is a side view of an embodiment of the optical apparatus shown in FIG. 1;
FIG. 5 is a wave vector diagram of light of an embodiment of the optical apparatus shown in FIG. 1; and
FIG. 6 is a structural schematic diagram of another embodiment of the optical apparatus of the present disclosure.

### DETAILED DESCRIPTION OF EMBODIMENTS

Below with reference to the drawings in the embodiments of the present disclosure, the technical solutions in the embodiments of the present disclosure are clearly and completely described, and obviously, the described embodiments are a part of the embodiments of the present disclosure rather than all embodiments. Based on the embodiments in the present disclosure, all other embodiments obtained by those skilled in the art without making creative efforts belong to the protection scope of the present disclosure.

Specific embodiments of the present disclosure are described in detail below in conjunction with the figures.

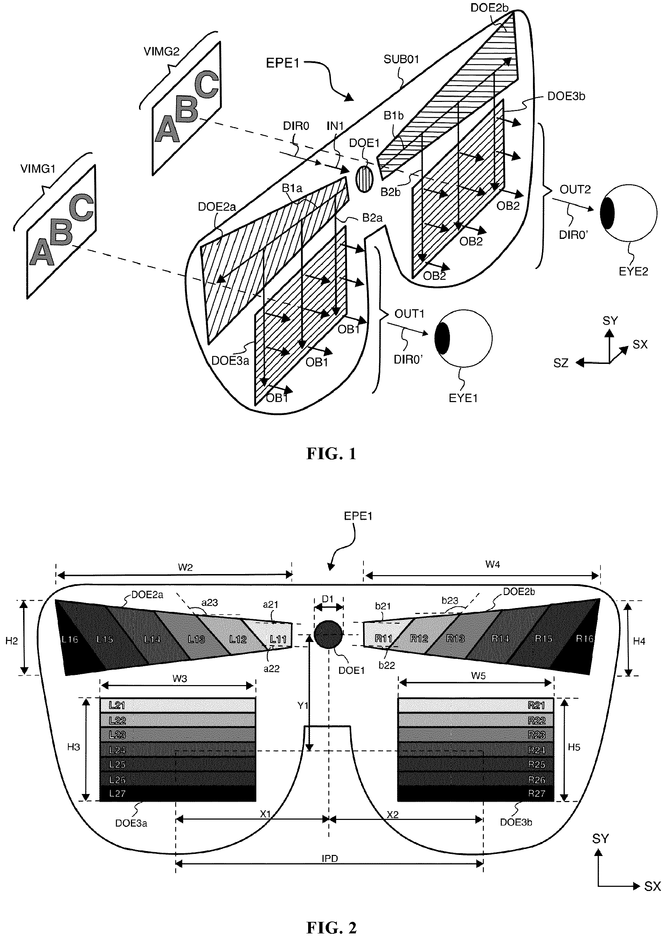

As shown in FIG. 1, an optical apparatus EPE1 can include a waveguide plate SUB01, wherein the waveguide plate SUB01 is a plane with good flatness. The waveguide plate SUB01 can be in a shape of a flat plate, or can also be in a shape of a bent plate that fits the human face, the flat plate and the bent plate both having good flatness.

An entrance pupil grating unit DOE1, a left intermediate-expansion-pupil grating unit DOE2a, a right intermediate-expansion-pupil grating unit DOE2b, a left exit pupil grating unit DOE3a, and a right exit pupil grating unit DOE3b are formed on the waveguide plate SUB01.

The entrance pupil grating unit DOE1 can receive input light beam IN1, and the left and the right exit pupil grating units DOE3a and DOE3b can provide expanded output light beams OUT1 and OUT2, respectively. Under the actions of the left and the right intermediate-expansion-pupil grating units DOE2a and DOE2b and the left and the right exit pupil grating units DOE3a and DOE3b, lengths and widths of the output light beams OUT1 and OUT2 are greater than the length and width of the input light beam IN1, thus realizing the function of pupil dilation.

The optical apparatus EPE1 can expand the light beam IN1 in two dimensions (for example, in the horizontal direction SX and in the vertical direction SY). The expansion process can also be called as exit pupil expansion, light ray expansion, etc. The optical apparatus EPE1 can also be called as a light beam expander or an exit pupil expander, etc.

The entrance pupil grating unit DOE1 can be used as an in-coupling unit. The entrance pupil grating unit DOE1 can diffract the input light beam IN1 to form the first left guided light B1a and the first right guided light B1b. The input light beam IN1 can be incident on a front surface of the optical apparatus EPE1 or incident on a back surface of the EPE1. The first left guided light B1a and the first right guided light B1b can propagate inside the planar waveguide plate SUB01, with the main directions of propagation thereof being left-right symmetrical. The first left guided light B1a and the first right guided light B1b can be limited in the planar waveguide plate SUB01 for total internal reflection.

In the above, the term "guide" can mean that the light propagates inside the planar waveguide plate SUB01 and the light ray is limited inside the plate by total internal reflection (TIR). The term "waveguide" can be the same as the term "optical waveguide".

The left intermediate-expansion-pupil grating unit DOE2a is configured for receiving and diffracting the first left guided light B1a to form the second left guided light B2a. The left intermediate-expansion-pupil grating unit DOE2a can nearly uniformly distribute the second left guided light B2a to the left exit pupil grating unit DOE3a, wherein the light width of the second left guided light B2a is much larger than that of the first left guided light B1a. The second left guided light B2a can be limited by total internal reflection to propagate in the waveguide plate SUB01.

The right intermediate-expansion-pupil grating unit DOE2b is configured for receiving and diffracting the first right guided light B1b to form the second right guided light B2b. The right intermediate-expansion-pupil grating unit DOE2b can nearly uniformly distribute the second right guided light B2b to the right exit pupil grating unit DOE3b, wherein the light width of the second right guided light B2b is much larger than that of the first right guided light B1b. The second right guided light B2b can be limited by total internal reflection to propagate in the waveguide plate SUB01.

In the above, the directions of the first left guided light B1a and the first right guided light B1b are left-right symmetrical, and the main directions of the second left guided light B2a and the second right guided light B2b are the same.

The left exit pupil grating unit DOE3a can diffract the expanded guided light B2a to form the left output light OB1, and the left output light OB1 is further widened in a Y direction and maintains good uniformity, thus forming the left output light beam OUT1 as a whole. Directions of the left output light OB1 and the left output light beam OUT1 are DIRO'.

The right exit pupil grating unit DOE3b can diffract the expanded guided light B2b to form the right output light OB2, and the right output light OB2 is further widened in the Y direction and maintains good uniformity, thus forming the right output light beam OUT2 as a whole. Directions of the right output light OB2 and the right output light beam OUT2 are also DIRO'.

In the above, the direction DIRO of incident light beam IN1 is consistent with the directions DIRO' of left and right output light beams OUT1 and OUT2, and no matter how the direction of the incident light beam IN1 changes, this relationship always holds all the time. Since the directions DIRO' of the left and right output light beams OUT1 and OUT2 are the same, the virtual image VIMG1 received by the left eye EYE1 and the virtual image VIMG2 received by the right eye EYE2 can be naturally fused together without angular deviation, and contents of the virtual image VIGM1 and the virtual image VIGM2 are exactly the same.

SX, SY, and SZ are orthogonal directions. The waveguide plate SUB1 can be parallel to the plane defined by SX and SY.

FIG. 2 shows partitioning and size situations of different grating zones of the optical apparatus EPE1. The entrance pupil grating unit DOE1 has a diameter D1, and an area range of D1 is 2.5 mm to 7mm. The entrance pupil grating unit DOE1 can be a surface relief grating or a volumetric holographic grating, which grating has a very high diffraction efficiency, and can form the first left guided light B1a and the first right guided light B1b to propagate energy to the left and right sides.

The left intermediate-expansion-pupil grating unit DOE2a is in a shape of quadrilateral which has a maximum width W2, a maximum height H2, and a left side highest, wherein the width W2 can be 5 to 10 times of the diameter D1, and the height H2 can be 2 to 5 times of the diameter D1. The angles between the upper and lower sides of the quadrilateral and the horizontal direction are a21 and a22, respectively. The left intermediate-expansion-pupil grating unit DOE2a needs to be further divided into 5 to 15 sub-intermediate-expansion-pupil zones internally. Taking 6 zones as an example, the left intermediate-expansion-pupil grating unit DOE2a includes sub-zones L11, L12, L13, L14, L15, and L16, and the included angles of the dividing lines between different sub-zones are each a23, which can be set in a range of 20° to 160°, and the included angles of the dividing lines of different adjacent sub-zones can be different to achieve the effect of better uniformity. In addition, the grating period can be fixed in different sub-zones to control the shape characteristics, depth, duty cycle, or exposure conditions of the grating, so that the diffraction efficiencies of different sub-zones gradually increase. That is, when i is greater than j, the grating diffraction efficiency of the sub-zone L1i is greater than that of the sub-zone L1j, and all efficiencies corresponding to the sub-zone diffraction gratings can be set in a range of 5%-95%.

The right intermediate-expansion-pupil grating unit DOE2b is in a shape of quadrilateral which has a maximum width W4, a maximum height H4 and a right side highest, wherein the width W4 can be 5 to 10 times of the diameter D1, and the height H4 can be 2 to 5 times of the diameter D1. The angles between the upper and lower sides of the quadrilateral and the horizontal direction are b21 and b22, respectively. The right intermediate-expansion-pupil grating unit DOE2b needs to be further divided into 5 to 15 sub-intermediate-expansion-pupil zones internally. Taking 6 zones as an example, the right intermediate-expansion-pupil grating unit DOE2b includes sub-zones R11, R12, R13, R14, R15, and R16, and the included angles of the dividing lines between different sub-zones are each b23, which can be set in a range of 20° to 160°, and the included angles of the dividing lines of different adjacent sub-zones can be different to achieve the effect of better uniformity. In addition, the grating period can be fixed in different sub-zones to control the shape characteristics, depth, duty cycle, or exposure conditions of the grating, so that the diffraction efficiencies of different sub-zones gradually increase. That is, when i is greater than j, the grating diffraction efficiency of the sub-zone R1i is greater than that of the sub-zone R1j, and all efficiencies corresponding to the sub-zone diffraction gratings can be set in a range of 5%-95%.

The left intermediate-expansion-pupil grating unit DOE2a and the right intermediate-expansion-pupil grating unit DOE2b have the same expanding grating structures, wherein their structural sizes, grating parameters, and partitioning characteristics must be in left-right mirror symmetry strictly, and the diffraction efficiencies of the individual sub-zones must also be the same, that is, L1i = R1i.

The left exit pupil grating unit DOE3a is in a shape of a rectangle which has a width W3 and a height H3, wherein the width W3 can be 80%-95% of the width W2, and the height H3 can be 3 to 6 times of the diameter D1. The left exit pupil grating unit DOE3a needs to be further divided into 5 to 15 sub-exit-pupil zones internally. Taking 7 zones as an example, the left exit pupil grating unit DOE3a includes sub-zones L21, L22, L23, L24, L25, L26, and L27 to achieve the effect of better uniformity. In addition, the grating period can be fixed in different sub-zones to control the shape characteristics, depth, duty cycle, or exposure conditions of the grating, so that the diffraction efficiencies of different sub-zones gradually increase. That is, when i is greater than j, the grating diffraction efficiency of the sub-zone L2i is greater than that of the sub-zone L2j, and all efficiencies corresponding to the sub-zone diffraction gratings can be set in a range of 5%-95%.

The right exit pupil grating unit DOE3b is in a shape of a rectangle which have a width W5 and a height H5, wherein the width W5 can be 80%-95% of the width W4, and the height H5 can be 3 to 6 times of the diameter D1. The right exit pupil grating unit DOE3a needs to be divided into 5 to 15 sub-exit-pupil zones internally. Taking 7 zones as an example, the right exit pupil grating unit DOE3a includes sub-zones R21, R22, R23, R24, R25, R26, and R27 to achieve the effect of better uniformity. In addition, the grating period can be fixed in different sub-zones to control the shape characteristics, depth, duty cycle, or exposure conditions of the grating, so that the diffraction efficiencies of different sub-zones gradually increase. That is, when i is greater than j, the grating diffraction efficiency of the sub-zone R2i is greater than that of the sub-zone R2j, and all efficiencies corresponding to the sub-zone diffraction gratings can be set in a range of 5%-95%.

The left exit pupil grating unit DOE3a and the right exit pupil grating unit DOE3b have the same exit pupil grating structures, wherein their structural sizes, grating parameters, and partitioning characteristics must be in left-right mirror symmetry strictly, and the diffraction efficiencies of the individual sub-zones also must be the same, that is, L2i = R2i.

The distance between the central position of the left exit pupil grating unit DOE3a and the central position of the right exit pupil grating unit DOE3b is an interpupillary distance IPD of human eyes, which is set to be in a range of IPD=60mm-70mm, wherein a left half distance X1 is equal to a right half distance X2, and X1+X2 =IPD. The vertical distance between the center of the entrance pupil grating unit DOE1 and the center of the left exit pupil grating unit DOE3a is Y1, and Y1 is set to be 8mm-25mm.

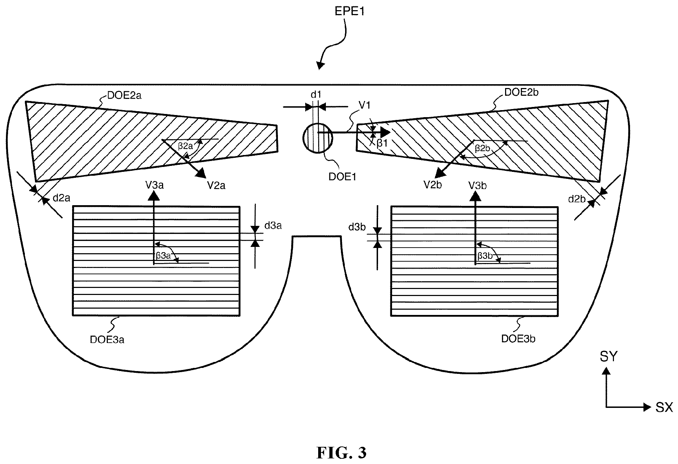

FIG. 3 shows the periods and the directions of different grating zones of the optical apparatus EPE1. Each of the units DOE1, DOE2a, DOE2b, DOE3a, and DOE3b can include one or more diffraction grating zones. For example, the unit DOE1 can include a grating zone. For example, the unit DOE2a can include a plurality of sub-zones, and the periods and directions of the individual sub-zone gratings remain consistent. For example, the unit DOE2b can include a plurality of sub-zones, and the periods and directions of the individual sub-zone gratings remain consistent. For example, the unit DOE3a can include a plurality of sub-zones, and the periods and directions of the individual sub-zone gratings remain consistent. For example, the unit DOE3b can include a plurality of sub-zones, and the periods and directions of the individual sub-zone gratings remain consistent.

The grating period (d) of the diffraction grating and the orientation (β) of the diffractive features of the diffraction grating can be determined by the grating vector V of the diffraction grating. The diffraction grating includes a plurality of diffractive features (F) that can be used as diffraction lines. Diffractive features can be, for example, tiny ridges or grooves. The diffractive features can also be, for example, microscopic protrusions (or depressions), wherein adjacent protrusions (or depressions) can act as diffraction lines. A grating vector V can be defined as a vector with a direction perpendicular to the diffraction lines of a diffraction grating and a magnitude given by 2π/d, wherein d is the grating period. The grating period has the same meaning as the length of the grating period. The grating period can be the length between successive diffractive features of the grating. The grating period can be equal to a unit length divided by the number of diffractive features within the unit length. The grating period d1a of the entrance pupil grating unit DOE1 can be in the range of, for example, 330nm to 450nm, and the optimum value depends on the refractive index of SUB1 and the wavelength λ of the diffracted light.

The entrance pupil grating unit DOE1 can have a grating vector V1. The left intermediate-expansion-pupil grating unit DOE2a can have a grating vector V2a. The right intermediate-expansion-pupil grating unit DOE2b can have a grating vector V2b. The left exit pupil grating unit DOE3a can have a grating vector V3a. The right exit pupil grating unit DOE3b can have a grating vector V3b.

The grating vector V1 has a direction β1 and a magnitude of 2π/d1. The grating vector V2a has a direction β2a and a magnitude of 2π/d2a. The grating vector V2b has a direction β2b and a magnitude of 2π/d2b. The grating vector V3a has a direction β3a and a magnitude of 2π/d3a. The grating vector V3b has a direction β3b and a magnitude of 2π/d3b. The direction (β) of the grating vector can be defined as the angle between the grating vector and a reference direction (e.g., direction SX).

The grating periods (d) and the orientations (β) of the diffraction gratings of optical units DOE1, DOE2a, and DOE3a can be selected, so that the propagation direction DIRO' of the light at the central point in the output light beam OUT1 is parallel to the propagation direction DIRO of the light at the central point in the input light IN1.

The grating periods (d) and the orientations (β) of the diffraction gratings of optical units DOE1, DOE2b, and DOE3b can be selected, so that the propagation direction DIRO' of the light at the central point in the output light beam OUT2 is parallel to the propagation direction DIRO of the light at the central point in the input light IN1.

The direction β1 of the grating vector V1 of the entrance pupil grating unit DOE1 can be about 0°, for example, -1° to 1°. The direction β2a of the grating vector V2a of the left intermediate-expansion-pupil grating unit DOE2a can be 30° to 60°. The direction β2b of the grating vector V2b of the right intermediate-expansion-pupil grating unit DOE2b can be 120° to 150°, and the grating vector V2a and the grating vector V2b are in mirror symmetry. The direction β3a of the grating vector V3a of the left exit pupil grating unit DOE3a can be around 90°, such as 88° to 92°. The direction β3b of the grating vector V3b of the right exit pupil grating unit DOE3b can be around 90°, such as 88° to 92°, and the grating vector V3a and the grating vector V3b are in mirror symmetry.

For predetermined integers m1, m2a, m2b, m3a, and m3b, the grating period (d) and direction (β) of the grating vector can satisfy that the vector sum (m1V1+m2aV2a+m3aV3a) is zero, and the vector sum (-m1V1+m2bV2b+m3bV3b) is zero. The values of these predetermined integers are usually +1 or -1. For example, the values of the integers m1, m2a, m2b, m3a, and m3b can be +1 or -1. Specifically, V1 is directed to the left, and the sum of V1, V2a, and V3a is zero; and V1 is directed to the right, and the sum of V1, V2b, and V3b is zero.

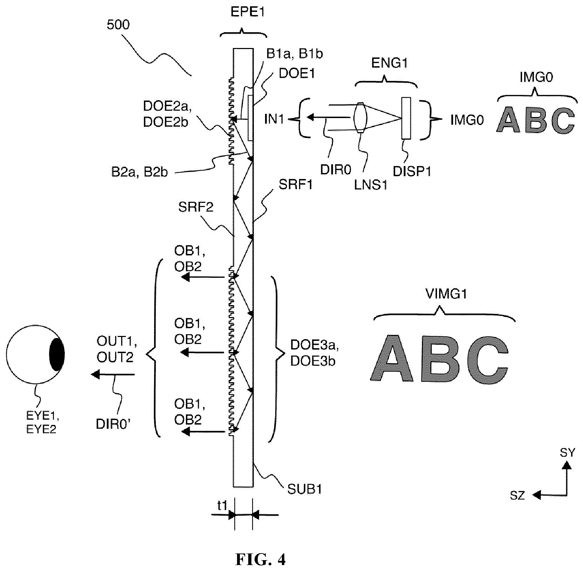

As shown in FIG. 4, the optical apparatus EPE1 can form the output light OUT1 by diffracting and guiding the input light IN1 obtained from the optical engine ENG1. The display device 500 can include the optical engine ENG1 and the optical apparatus EPE1.

The input light IN1 can include a plurality of light beams propagating in different directions. Each light beam of the input light IN1 can correspond to a different point of the input image IMGO. The output lights OUT1 and OUT2 can include a plurality of light beams propagating in different directions, and enter the left eye EYE1 and the right eye EYE2, respectively. Each light beam of the output lights OUT1 and OUT2 can correspond to a different point of the displayed virtual image VIMG1. The optical apparatus EPE1 can form the left output light OUT1 and the right output light OUT2 from the input light IN1, so that the directions and intensities of the light beams of the output lights OUT1 and OUT2 correspond to the points of the input image IMGO.

The light beams of the input light IN1 can correspond to a single image point of the display image. The optical apparatus EPE1 can form the left output light beam OB1 and the right output light beam OB2 with the same direction from the light beams of the input light IN1, so that the direction DIRO' of the output light beams is parallel to the direction DIRO of the light beams of the corresponding input light IN1.

The display device 500 can include an optical engine ENG1 to form a main image IMGO and convert the main image IMGO into a plurality of light beams of the input light IN1. Light of the light engine ENG1 can be coupled in from the entrance pupil grating unit DOE1 of the optical apparatus EPE1. The input light IN1 can be coupled in from the entrance pupil grating unit DOE1 of the optical apparatus EPE1. The device 500 can be a display device for displaying virtual images. The device 500 can also be a myopic optical device.

The optical apparatus EPE1 can propagate the virtual image content from the light engine ENG1 to the front of the left eye EYE1 and the right eye EYE2 of the user. The optical apparatus EPE1 can expand the pupil, thereby expanding the eyebox.

The light engine ENG1 can include a micro-display DISP1 to generate the main image IMGO. The micro-display DISP1 can include a two-dimensional array of light-emitting pixels. The display DISP1 can generate such as the main image IMGO with a resolution of 1280×720 (HD). The display DISP1 can generate such as the main image IMGO with a resolution of 1920×1080 (Full HD)). The display DISP1 can generate such as the main image IMGO with a resolution of 3840×2160 (4K UHD). The light engine ENG1 can include a collimating optical device LNS 1 to form different light beams for individual image pixels. The light engine ENG1 include a collimating optical device LNS1, so as to make the light emitted from a certain pixel point form a substantially collimated light beam. Different pixel points correspond to different collimation directions.

The light engine ENG1 can provide a plurality of light beams corresponding to the generated main image IMGO. One or more light beams provided by the light engine ENG1 can be coupled to the optical apparatus EPE1 and used as the input light IN1.

The light engine ENG1 can include, for example, one or more light-emitting diodes (LED). Display DISP1 can include one or more micro-display imagers, such as liquid crystal on silicon (LCOS), liquid crystal display (LCD), and digital micromirror device (DMD).

The waveguide plate SUB1 can have a first main surface SRF1 and a second main surface SRF2. The surfaces SRF1 and SRF2 can be substantially parallel to a plane defined by directions SX and SY. The waveguide plate SUB1 can have a thickness t1. The waveguide plate includes the planar waveguide core portion. In an embodiment, the waveguide plate SUB1 can optionally include, for example, one or more coating layers, one or more protective layers, and/or one or more mechanical support layers. The thickness t1 can refer to the thickness of the planar waveguide core portion of the waveguide plate SUB1.

The grating structure of the entrance pupil grating unit DOE1 can be provided on the first main surface SRF1 or the second main surface SRF2 of the waveguide plate SUB1, and forms the first left guided light B1a and the first right guided light B1b by diffracting the input light beam IN1. The input light beamIN1 can be incident on the front surface of the optical apparatus EPE1 or the back surface of the EPE1. The first left guided light B1a and first right guided light B1b can propagate inside the planar waveguide plate SUB01, with the main directions of propagation thereof being left-right symmetrical. The first left guided light B1a and first right guided light B1b can be limited in the plane waveguide plate SUB1 for total internal reflection.

The grating structures of the right intermediate-expansion-pupil grating unit DOE2b and the right intermediate-expansion-pupil grating unit DOE2b can be provided on the first main surface SRF1 or the second main surface SRF2 of the waveguide plate SUB1. The left intermediate-expansion-pupil grating unit DOE2a is used to receive the first left guided light B1a and form the second left guided light B2a through diffraction. The left intermediate-expansion-pupil grating unit DOE2a can nearly uniformly distribute the second left guided light B2a to the left exit pupil grating unit DOE3a, and the second left guided light B2a can be limited by total internal reflection, to propagate in the waveguide plate SUB1. The right intermediate-expansion-pupil grating unit DOE2b is used to receive the first right guided light B1a and form the second right guided light B2b through diffraction. The right intermediate-expansion-pupil grating unit DOE2b can distribute the second right guided light B2b nearly uniformly to the right exit pupil grating unit DOE3b. The second left guided light B2a can be limited by total internal reflection to propagate in the waveguide plate SUB1.

The grating structures of the left exit pupil grating unit DOE3a and the right exit pupil grating unit DOE3b can be provided on the first main surface SRF1 or the second main surface SRF2 of the waveguide plate SUB1. The left exit pupil grating unit DOE3a can diffract the expanded guided light B2a to form the left output light OB1, and form the left output light beam OUT1 as a whole. The directions of the left output light OB1 and the left output light beam OUT1 are DIRO'. The right exit pupil grating unit DOE3b can diffract the expanded guided light B2b to form the right output light OB2, and form the right output light beam OUT2 as a whole. The directions of the right output light OB2 and the right output light beam OUT2 are also DIRO'.

The left output light beam OUT1 and the right output light beam OUT2 enter the left eye EYE1 and the right eye EYE2, respectively. Since the light beams have the same direction, the left and right eyes can achieve binocular fusion without other additional adjustments. Due to the overall left-right symmetrical relationship, color complementarity of the images of the left and right eyes is realized, thereby achieving better color uniformity and a larger FOV.

The waveguide plate SUB1 can include or consist essentially of a transparent solid material. The waveguide plate SUB1 can include such as glass, polycarbonate, or polymethyl methacrylate (PMMA). The diffractive optical elements DOE1, DOE2a, DOE2b, DOE3a, and DOE3b can be formed by such as molding, embossing, and/or etching. The units DOE1, DOE2a, DOE2b, DOE3a, and DOE3b can be realized by, for example, one or more surface diffraction gratings, or by one or more volume diffraction gratings.

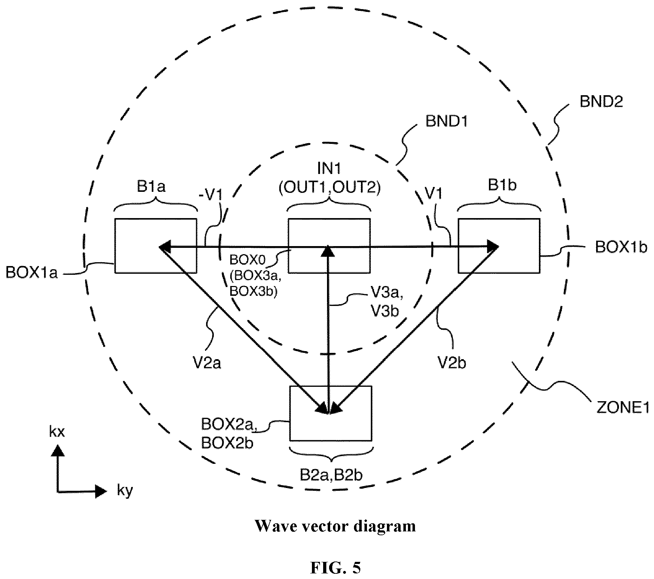

FIG. 5 shows the wave vector diagram of light by way of example, and the light of this wavelength can propagate in the waveguide plate SUB1 along the left path and the right path. The wave vector of the input light IN1 can exist in zone BOX0 of the wave vector space defined by the initial wave vectors kx and ky. Each corner of zone BOX0 can represent a wave vector of light at a corner point of an input image IMG0.

The wave vector of the first left guided light B1a can be in zone BOX1a, the wave vector of the first right guided light B1b can be in zone BOX1a, the wave vector of the second left guided light B2a can be in zone BOX2a, the wave vector of the second right guided light B2b can be in zone BOX2b, the wave vector of the left output light beam OUT1 can be in zone BOX3a, and the wave vector of the right output light beam OUT2 can be in zone BOX3b.

BND1 represents the minimum boundary for meeting the total internal reflection (TIR) standard in the waveguide plate SUB1, and BND2 represents the maximum boundary of the total internal reflection (TIR) standard in the waveguide plate SUB1, which can be determined by the refractive index of the waveguide plate. Light can be waveguided in the plate SUB1 only if the wave vector of the light is in zone ZONE1 between the first boundary BND1 and the second boundary BND2. If the wave vector of the light is outside the zone ZONE1, the light can leak out of the waveguide plate or not propagate at all.

The grating periods (d) and the orientations (β) of the diffraction gratings of the optical units DOE1, DOE2a, DOE3a, DOE2b, and DOE3b can be selected, so as to make zone BOX0, zone BOX3a, and zone BOX3b in the wave vector space are almost coincident. At the same time, as for the wavelengths of the three colors RGB, the wave vectors of zone BOX1a, zone BOX1b, zone BOX2a, and zone BOX2b are all within zone ZONE1 which is defined by the boundaries BND1 and BND2. At the same time, zone BOX2a and zone BOX2b in the wave vector space are almost coincident.

The left path is counterclockwise, for example, the entrance pupil grating unit DOE1 can form the first left guided light B1a by diffracting the input light IN1, that is, by adding the grating vector -m1V1 of the entrance pupil grating unit DOE1 and the wave vector of the input light IN1, the wave vector of the first left guided light B1a obtained by diffracting is represented. The wave vector of the second left guided light B2a can be determined by adding the grating vector m2aV2a and the wave vector of the first guided light B1a. Finally, the wave vector of the outgoing light OUT1 can be determined by adding the grating vector m3aV3a to the wave vector of the second left guided light B2a.

The right path is counterclockwise, for example, the entrance pupil grating unit DOE1 can form the first right guided light B1b by diffracting the input light IN1, that is, by adding the grating vector m1V1 of the entrance pupil grating unit DOE1 and the wave vector of the input light IN1, the wave vector of the first right guided light B1b obtained by diffracting is represented. The wave vector of the second right guided light B2b can be determined by adding the grating vector m2bV2b and the wave vector of the first guided light B1b. Finally, the wave vector of the outgoing light OUT2 can be determined by adding the grating vector m3bV3b to the wave vector of the second right guided light B2b.

The grating periods (d) and the orientations (β) of the diffraction gratings of the optical units DOE1, DOE2a, DOE3a, DOE2b, and DOE3b can be selected, so that the included angle of the grating vectors -V1 and V2a can be 30° to 60°, the included angle of the grating vectors V1 and V2b can be 120° to 150°, the included angle of the grating vectors V2a and V3a can be 30° to 60°, the included angle of the grating vectors V2b and V3b can be 30° to 60°, and the left path and the right path of light propagation are in mirror symmetry.
kx represents a direction in the wave vector space, wherein the direction kx is parallel to the direction SX of the actual space. ky represents the direction in the wave vector space, wherein the direction ky is parallel to the direction SY of the actual space. The symbol kz (not shown in the figures) represents the direction in the wave vector space, wherein the direction kz is parallel to the direction SZ in the actual space. The wave vector k can have components in the directions kx, ky, and/or kz.

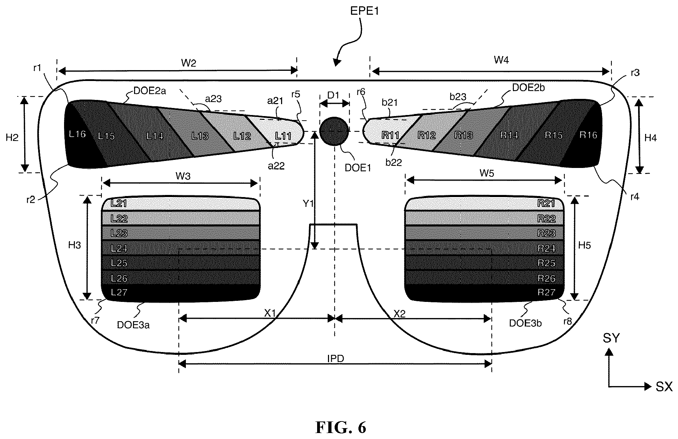

FIG. 6 shows through the front view of the optical apparatus EPE1 that the corners of the grating zones can be made into arcs, to better adapt to the shape of the glasses.

The second left intermediate-expansion-pupil zone DOE2a has an upper left radian of r1, a lower left radian of r2, and a right radian of r5. The second right intermediate-expansion-pupil zone DOE2b has an upper right radian of r3, a lower right radian of r4, and a left radian is r6. The radians of four corners of the third left exit pupil zone DOE3a can each be r7, and the radians of four corners of the third right exit pupil zone DOE3b can each be r8. In the above, the curvature radiuses of all radians range from 2mm to 20mm.

The optical apparatus of the present embodiment only requires one light engine to transmit the light entering the entrance pupil to the left and right eyes, which improves the overall efficiency of the diffraction waveguide. By using the grating setting of the waveguide plate, the accuracy of the glass wafer is used to control the binocular coupling, which reduces the difficulty in generation of binocular coupling and improves the coupling degree. Moreover, the left and right eyes are optically symmetrical and can compensate for each other, and the uniformity of the color can be better. The integrated waveguide design can match the radian shape and is more suitable for the human body to use.

In the above description of the present specification, unless otherwise clearly specified and defined, terms such as "fixed", "installed", "connected" or "linked" can be understood in a broad sense. For example, as far as the term "connection" is concerned, it can be a fixed connection, a detachable connection, or an integral connection; it can be a mechanical connection or an electrical connection; it can be a direct connection or an indirect connection through an intermediary, or it can be the internal communication of two elements or the interaction relationship between two elements. Therefore, unless otherwise clearly defined in the present specification, those skilled in the art can understand the specific meanings of the above terms in the present disclosure according to specific situations.

According to the above-mentioned description of the present specification, those skilled in the art can also understand the terms used below, such as "upper", "lower", "front", "rear", "left", "right", "length", "width", "thickness", "vertical", "horizontal", "top", "bottom", "inner", "outer", "axial", "radial", "circumferential", "center", "longitudinal", "transverse", "clockwise" or "counterclockwise" and other terms indicating orientation or positional relationship are based on the orientation or positional relationship shown in the drawings of the present specification, which are only for the convenience of illustrating solutions of the present disclosure and simplifying the description, but are not to express or imply that the devices or elements involved must have the specific orientation, be constructed and operated in a specific orientation. Therefore, the above orientation or positional relationship terms can not be understood or interpreted as a limitation to the solutions of the present disclosure.

In addition, terms such as "first" and "second" used in the present description and used to refer to numbers or ordinals are only used for description, and can not be understood as indicating or implying importance relativity or implicitly indicating the number of indicated technical features. Thus, a feature defined as "first" or "second" can explicitly or implicitly include at least one of the features. In the description of the present description, the meaning of "a plurality of" refers to at least two, such as two, three, or more, etc., unless specifically defined otherwise.

## Claims

1. An optical apparatus (EPE1), comprising a waveguide plate (SUB01), wherein the waveguide plate (SUB01) comprises:
an entrance pupil grating unit (DOE1), wherein input light (IN1) is diffracted by the entrance pupil grating unit (DOE1) to form first left guided light and first right guided light;
a left intermediate-expansion-pupil grating unit (DOE2a), located at a left side in a horizontal direction of the entrance pupil grating unit (DOE1), wherein the first left guided light is diffracted by the left intermediate-expansion-pupil grating unit (DOE2a) to form second left guided light;
a right intermediate-expansion-pupil grating unit (DOE2b), located at a right side in the horizontal direction of the entrance pupil grating unit (DOE1), wherein the first right guided light is diffracted by the right intermediate-expansion-pupil grating unit (DOE2b) to form second right guided light;
a left exit pupil grating unit (DOE3a), located at a lower side in a vertical direction of the left intermediate-expansion-pupil grating unit (DOE2a), wherein the second left guided light is diffracted by the left exit pupil grating unit (DOE3a) to form left output light (OUT1); and
a right exit pupil grating unit (DOE3b), located at a lower side in a vertical direction of the right intermediate-expansion-pupil grating unit (DOE2b), wherein the second right guided light is diffracted by the right exit pupil grating unit (DOE3b) to form right output light (OUT2),
wherein the left intermediate-expansion-pupil grating unit (DOE2a) and the right intermediate-expansion-pupil grating unit (DOE2b) are in left-right mirror symmetry about the entrance pupil grating unit (DOE1), the left exit pupil grating unit (DOE3a) and the right exit pupil grating unit (DOE3b) are in left-right mirror symmetry about the entrance pupil grating unit (DOE1), and directions of the input light (IN1), the left output light (OUT1), and the right output light (OUT2) are consistent;
**characterized in that** the entrance pupil grating unit (DOE1) has only one grating vector (V1), the left intermediate-expansion-pupil grating unit (DOE2a) has only one grating vector (V2a), the right intermediate-expansion-pupil grating unit (DOE2b) has only one grating vector (V2b), the left exit pupil grating unit (DOE3a) has only one grating vector (V3a), and the right exit pupil grating unit (DOE3b) has only one grating vector (V3b);
wherein the left intermediate-expansion-pupil grating unit (DOE2a) and the right intermediate-expansion-pupil grating unit (DOE2b) each comprise a plurality of sub-intermediate-expansion-pupil zones, and angles between boundaries of adjacent sub-intermediate-expansion-pupil zones and a horizontal direction are different.

2. The optical apparatus (EPE1) as claimed in claim 1, wherein the entrance pupil grating unit (DOE1) is a surface relief grating or a volumetric holographic grating, the entrance pupil grating unit (DOE1) is a circle, and its diameter is 2.5mm to 7mm, and a grating period of the entrance pupil grating unit (DOE1) is 330nm to 450nm.

3. The optical apparatus (EPE1) as claimed in claim 2, wherein both the left intermediate-expansion-pupil grating unit (DOE2a) and the right intermediate-expansion-pupil grating unit (DOE2b) are expanding grating structures, wherein in a direction away from the entrance pupil grating unit (DOE1) horizontally, a height of each of the expanding grating structures gradually increases in the vertical direction; and wherein a maximum height of the expanding grating structure in the vertical direction is 2 to 5 times of the diameter of the entrance pupil grating unit (DOE1), and a width of the expanding grating structure in the horizontal direction is 5 to 10 times of the diameter of the entrance pupil grating unit (DOE1).

4. The optical apparatus (EPE1) as claimed in claim 3, wherein each of the expanding grating structures is divided into 5 to 15 sub-intermediate-expansion-pupil zones, and an angle between a dividing line of adjacent sub-intermediate-expansion-pupil zones and the horizontal direction is 20 degrees to 160 degrees; and in a direction away from the entrance pupil grating unit (DOE1), a diffraction efficiency of each of the sub-intermediate-expansion-pupil zones increases gradually, and the diffraction efficiency of each of the sub-intermediate-expansion-pupil zones is 5% to 95%.

5. The optical apparatus (EPE1) as claimed in claim 3, wherein both the left exit pupil grating unit (DOE3a) and the right exit pupil grating unit (DOE3b) are exit pupil grating structures, wherein the exit pupil grating structures are rectangular, and have heights in the vertical direction being 3 to 6 times of the diameter of the entrance pupil grating unit (DOE1), and widths in the horizontal direction being 80% to 95% of the widths of the expanding grating structures.

6. The optical apparatus (EPE1) as claimed in claim 5, wherein each of the exit pupil grating structures is divided into 5 to 15 sub-exit-pupil zones in the vertical direction, and in a direction vertically away from the entrance pupil grating unit (DOE1), a diffraction efficiency of each of the sub-exit-pupil zones increases gradually, and the diffraction efficiency of each of the sub-exit-pupil zones is 5% to 95%.

7. The optical apparatus (EPE1) as claimed in claim 5, wherein the expanding grating structures are quadrangular, wherein four corners of each of the expanding grating structures and four corners of each of the exit pupil grating structures are made into arc structures, and curvature radiuses of arcs are 0mm to 20mm.

8. The optical apparatus (EPE1) as claimed in any one of claims 1 to 7, wherein a horizontal distance from a center of the left exit pupil grating unit (DOE3a) to a center of the right exit pupil grating unit (DOE3b) is equal to an interpupillary distance of human eyes, and the interpupillary distance of human eyes is 60mm to 70mm; wherein a vertical distance from the center of the entrance pupil grating unit (DOE1) to the center of the left exit pupil grating unit (DOE3a) is 8mm to 25mm.

9. The optical apparatus (EPE1) as claimed in any one of claims 1 to 8, wherein with a direction from left to right taken as a reference, a grating vector direction of the entrance pupil grating unit (DOE1) is -1 degree to 1 degree, a grating vector direction of the left intermediate-expansion-pupil grating unit (DOE2a) is 30 degrees to 60 degrees, a grating vector direction of the right intermediate-expansion-pupil grating unit (DOE2b) is 120 degrees to 150 degrees, a grating vector direction of the left exit pupil grating unit (DOE3a) is 88 degrees to 92 degrees, and a grating vector direction of the right exit pupil grating unit (DOE3b) is 88 degrees to 92 degrees.

10. The optical apparatus (EPE1) as claimed in claim 9, wherein in a wave vector space, wave vector zones of the left output light (OUT1), the right output light (OUT2), and the input light (IN1) are coincident, wave vector zones of the first left guided light and the first right guided light, and wave vector zones of the second left guided light and the second right guided light are both between a minimum wave vector of total internal reflection and a maximum wave vector of total internal reflection of the waveguide plate (SUB01), and the wave vector zones of the second left guided light and the second right guided light are coincident.

11. The optical apparatus (EPE1) as claimed in claim 9, wherein a grating vector of the entrance pupil grating unit (DOE1) is directed to left, and a sum of grating vectors of the entrance pupil grating unit (DOE1), the left intermediate-expansion-pupil grating unit (DOE2a), and the left exit pupil grating unit (DOE3a) is zero; and the grating vector of the entrance pupil grating unit (DOE1) is directed to right, and a sum of grating vectors of the entrance pupil grating unit (DOE1), the right intermediate-expansion-pupil grating unit (DOE2b), and the right exit pupil grating unit (DOE3b) is zero.

12. A display device (500), comprising a light engine, and the optical apparatus (EPE1) as claimed in any one of claims 1-11, wherein the light engine is configured for generating the input light (IN1).

## Patentansprüche

1. Optische Vorrichtung (EPE1), umfassend eine Wellenleiterplatte (SUB01), wobei die Wellenleiterplatte (SUB01) umfasst:
eine Eintrittspupillen-Gittereinheit (DOE1), wobei Eingangslicht (IN1) durch die Eintrittspupillen-Gittereinheit (DOE1) gebeugt wird, um erstes linkes geführtes Licht und erstes rechtes geführtes Licht zu bilden;
eine linke Zwischenexpansionspupillen-Gittereinheit (DOE2a), angeordnet auf einer linken Seite der Eintrittspupillen-Gittereinheit (DOE1) in horizontaler Richtung, wobei das erste linke geführte Licht durch die linke Zwischenexpansionspupillen-Gittereinheit (DOE2a) gebeugt wird, um zweites linkes geführtes Licht zu bilden;
eine rechte Zwischenexpansionspupillen-Gittereinheit (DOE2b), angeordnet auf einer rechten Seite der Eintrittspupillen-Gittereinheit (DOE1) in horizontaler Richtung, wobei das erste rechte geführte Licht durch die rechte Zwischenexpansionspupillen-Gittereinheit (DOE2b) gebeugt wird, um zweites rechtes geführtes Licht zu bilden;
eine linke Austrittspupillen-Gittereinheit (DOE3a), angeordnet auf einer unteren Seite der linken Zwischenexpansionspupillen-Gittereinheit (DOE2a) in vertikaler Richtung, wobei das zweite linke geführte Licht durch die linke Austrittspupillen-Gittereinheit (DOE3a) gebeugt wird, um linkes Ausgangslicht (OUT1) zu bilden; und
eine rechte Austrittspupillen-Gittereinheit (DOE3b), angeordnet auf einer unteren Seite der rechten Zwischenexpansionspupillen-Gittereinheit (DOE2b) in vertikaler Richtung, wobei das zweite rechte geführte Licht durch die rechte Austrittspupillen-Gittereinheit (DOE3b) gebeugt wird, um rechtes Ausgangslicht (OUT2) zu bilden,
wobei die linke Zwischenexpansionspupillen-Gittereinheit (DOE2a) und die rechte Zwischenexpansionspupillen-Gittereinheit (DOE2b) bezüglich der Eintrittspupillen-Gittereinheit (DOE1) links-rechts-spiegelsymmetrisch sind, die linke Austrittspupillen-Gittereinheit (DOE3a) und die rechte Austrittspupillen-Gittereinheit (DOE3b) bezüglich der Eintrittspupillen-Gittereinheit (DOE1) links-rechts-spiegelsymmetrisch sind und Richtungen des Eingangslichts (IN1), des linken Ausgangslichts (OUT1) und des rechten Ausgangslichts (OUT2) übereinstimmen;
**dadurch gekennzeichnet, dass** die Eintrittspupillen-Gittereinheit (DOE1) nur einen Gittervektor (V1) aufweist, die linke Zwischenexpansionspupillen-Gittereinheit (DOE2a) nur einen Gittervektor (V2a) aufweist, die rechte Zwischenexpansionspupillen-Gittereinheit (DOE2b) nur einen Gittervektor (V2b) aufweist, die linke Austrittspupillen-Gittereinheit (DOE3a) nur einen Gittervektor (V3a) aufweist und die rechte Austrittspupillen-Gittereinheit (DOE3b) nur einen Gittervektor (V3b) aufweist;
wobei die linke Zwischenexpansionspupillen-Gittereinheit (DOE2a) und die rechte Zwischenexpansionspupillen-Gittereinheit (DOE2b) jeweils mehrere Unter-Zwischenexpansionspupillenzonen umfassen und Winkel zwischen Grenzen benachbarter Unter-Zwischenexpansionspupillenzonen und einer horizontalen Richtung unterschiedlich sind.

2. Optische Vorrichtung (EPE1) nach Anspruch 1, wobei die Eintrittspupillen-Gittereinheit (DOE1) ein Oberflächenreliefgitter oder ein volumenholographisches Gitter ist, die Eintrittspupillen-Gittereinheit (DOE1) kreisförmig ist und ihr Durchmesser 2,5 mm bis 7 mm beträgt und eine Gitterperiode der Eintrittspupillen-Gittereinheit (DOE1) 330 nm bis 450 nm beträgt.

3. Optische Vorrichtung (EPE1) nach Anspruch 2, wobei sowohl die linke Zwischenexpansionspupillen-Gittereinheit (DOE2a) als auch die rechte Zwischenexpansionspupillen-Gittereinheit (DOE2b) Expansionsgitterstrukturen sind, wobei in einer Richtung, die sich horizontal von der Eintrittspupillen-Gittereinheit (DOE1) weg erstreckt, eine Höhe jeder der Expansionsgitterstrukturen in vertikaler Richtung allmählich zunimmt; und wobei eine maximale Höhe der Expansionsgitterstruktur in vertikaler Richtung das 2- bis 5-Fache des Durchmessers der Eintrittspupillen-Gittereinheit (DOE1) beträgt und eine Breite der Expansionsgitterstruktur in horizontaler Richtung das 5- bis 10-Fache des Durchmessers der Eintrittspupillen-Gittereinheit (DOE1) beträgt.

4. Optische Vorrichtung (EPE1) nach Anspruch 3, wobei jede der Expansionsgitterstrukturen in 5 bis 15 Unter-Zwischenexpansionspupillenzonen unterteilt ist und ein Winkel zwischen einer Trennlinie benachbarter Unter-Zwischenexpansionspupillenzonen und der horizontalen Richtung 20° bis 160° beträgt; und wobei in einer Richtung, die sich von der Eintrittspupillen-Gittereinheit (DOE1) weg erstreckt, eine Beugungseffizienz jeder der Unter-Zwischenexpansionspupillenzonen allmählich zunimmt und die Beugungseffizienz jeder der Unter-Zwischenexpansionspupillenzonen 5 % bis 95 % beträgt.

5. Optische Vorrichtung (EPE1) nach Anspruch 3, wobei sowohl die linke Austrittspupillen-Gittereinheit (DOE3a) als auch die rechte Austrittspupillen-Gittereinheit (DOE3b) Austrittspupillen-Gitterstrukturen sind, wobei die Austrittspupillen-Gitterstrukturen rechteckig sind und Höhen in vertikaler Richtung aufweisen, die das 3- bis 6-Fache des Durchmessers der Eintrittspupillen-Gittereinheit (DOE1) betragen, und Breiten in horizontaler Richtung aufweisen, die 80 % bis 95 % der Breiten der Expansionsgitterstrukturen betragen.

6. Optische Vorrichtung (EPE1) nach Anspruch 5, wobei jede der Austrittspupillen-Gitterstrukturen in vertikaler Richtung in 5 bis 15 Unter-Austrittspupillenzonen unterteilt ist und in einer Richtung, die sich vertikal von der Eintrittspupillen-Gittereinheit (DOE1) weg erstreckt, eine Beugungseffizienz jeder der Unter-Austrittspupillenzonen allmählich zunimmt und die Beugungseffizienz jeder der Unter-Austrittspupillenzonen 5 % bis 95 % beträgt.

7. Optische Vorrichtung (EPE1) nach Anspruch 5, wobei die Expansionsgitterstrukturen viereckig sind, wobei vier Ecken jeder der Expansionsgitterstrukturen und vier Ecken jeder der Austrittspupillen-Gitterstrukturen als Bogenstrukturen ausgebildet sind und Krümmungsradien der Bögen 0 mm bis 20 mm betragen.

8. Optische Vorrichtung (EPE1) nach einem der Ansprüche 1 bis 7, wobei ein horizontaler Abstand von einem Zentrum der linken Austrittspupillen-Gittereinheit (DOE3a) zu einem Zentrum der rechten Austrittspupillen-Gittereinheit (DOE3b) einem Pupillenabstand menschlicher Augen entspricht und der Pupillenabstand menschlicher Augen 60 mm bis 70 mm beträgt; wobei ein vertikaler Abstand von dem Zentrum der Eintrittspupillen-Gittereinheit (DOE1) zu dem Zentrum der linken Austrittspupillen-Gittereinheit (DOE3a) 8 mm bis 25 mm beträgt.

9. Optische Vorrichtung (EPE1) nach einem der Ansprüche 1 bis 8, wobei bei Zugrundelegung einer Richtung von links nach rechts als Referenz eine Gittervektorrichtung der Eintrittspupillen-Gittereinheit (DOE1) von -1 Grad bis 1 Grad beträgt, eine Gittervektorrichtung der linken Zwischenexpansionspupillen-Gittereinheit (DOE2a) von 30 Grad bis 60 Grad beträgt, eine Gittervektorrichtung der rechten Zwischenexpansionspupillen-Gittereinheit (DOE2b) von 120 Grad bis 150 Grad beträgt, eine Gittervektorrichtung der linken Austrittspupillen-Gittereinheit (DOE3a) von 88 Grad bis 92 Grad beträgt und eine Gittervektorrichtung der rechten Austrittspupillen-Gittereinheit (DOE3b) von 88 Grad bis 92 Grad beträgt.

10. Optische Vorrichtung (EPE1) nach Anspruch 9, wobei in einem Wellenvektorraum Wellenvektorbereiche des linken Ausgangslichts (OUT1), des rechten Ausgangslichts (OUT2) und des Eingangslichts (IN1) zusammenfallen, Wellenvektorbereiche des ersten linken geführten Lichts und des ersten rechten geführten Lichts sowie Wellenvektorbereiche des zweiten linken geführten Lichts und des zweiten rechten geführten Lichts jeweils zwischen einem minimalen Wellenvektor der Totalreflexion und einem maximalen Wellenvektor der Totalreflexion der Wellenleiterplatte (SUB01) liegen und die Wellenvektorbereiche des zweiten linken geführten Lichts und des zweiten rechten geführten Lichts zusammenfallen.

11. Optische Vorrichtung (EPE1) nach Anspruch 9, wobei ein Gittervektor der Eintrittspupillen-Gittereinheit (DOE1) nach links gerichtet ist und eine Summe von Gittervektoren der Eintrittspupillen-Gittereinheit (DOE1), der linken Zwischenexpansionspupillen-Gittereinheit (DOE2a) und der linken Austrittspupillen-Gittereinheit (DOE3a) null ist; und wobei der Gittervektor der Eintrittspupillen-Gittereinheit (DOE1) nach rechts gerichtet ist und eine Summe von Gittervektoren der Eintrittspupillen-Gittereinheit (DOE1), der rechten Zwischenexpansionspupillen-Gittereinheit (DOE2b) und der rechten Austrittspupillen-Gittereinheit (DOE3b) null ist.

12. Anzeigevorrichtung (500), umfassend eine Lichtquelle und die optische Vorrichtung (EPE1) nach einem der Ansprüche 1 bis 11, wobei die Lichtquelle eingerichtet ist zum Erzeugen des Eingangslichts (IN1).

## Revendications

1. Appareil optique (EPE1), comprenant une plaque guide d'ondes (SUB01), dans lequel la plaque guide d'ondes (SUB01) comprend :
une unité de réseau de pupille d'entrée (DOE1), dans lequel une lumière d'entrée (IN1) est diffractée par l'unité de réseau de pupille d'entrée (DOE1) pour former une première lumière guidée gauche et une première lumière guidée droite ;
une unité de réseau d'expansion intermédiaire de pupille gauche (DOE2a), située sur un côté gauche dans une direction horizontale de l'unité de réseau de pupille d'entrée (DOE1), dans lequel la première lumière guidée gauche est diffractée par l'unité de réseau d'expansion intermédiaire de pupille gauche (DOE2a) pour former une deuxième lumière guidée gauche ;
une unité de réseau d'expansion intermédiaire de pupille droit (DOE2b), située sur un côté droit dans la direction horizontale de l'unité de réseau de pupille d'entrée (DOE1), dans lequel la première lumière guidée droite est diffractée par l'unité de réseau d'expansion intermédiaire de pupille droit (DOE2b) pour former une deuxième lumière guidée droite ;
une unité de réseau de pupille de sortie gauche (DOE3a), située sur un côté inférieur dans une direction verticale de l'unité de réseau d'expansion intermédiaire de pupille gauche (DOE2a), dans lequel la deuxième lumière guidée gauche est diffractée par l'unité de réseau de pupille de sortie gauche (DOE3a) pour former une lumière de sortie gauche (OUT1) ; et
une unité de réseau de pupille de sortie droit (DOE3b), située sur un côté inférieur dans une direction verticale de l'unité de réseau d'expansion intermédiaire de pupille droit (DOE2b), dans lequel la deuxième lumière guidée droite est diffractée par l'unité de réseau de pupille de sortie droit (DOE3b) pour former une lumière de sortie droite (OUT2),
dans lequel l'unité de réseau d'expansion intermédiaire de pupille gauche (DOE2a) et l'unité de réseau d'expansion intermédiaire de pupille droit (DOE2b) sont en symétrie spéculaire gauche-droite autour de l'unité de réseau de pupille d'entrée (DOE1), l'unité de réseau de pupille de sortie gauche (DOE3a) et l'unité de réseau de pupille de sortie droit (DOE3b) sont en symétrie spéculaire gauche-droite autour de l'unité de réseau de pupille d'entrée (DOE1), et les directions de la lumière d'entrée (IN1), de la lumière de sortie gauche (OUT1) et de la lumière de sortie droite (OUT2) sont cohérentes ;
**caractérisé en ce que** l'unité de réseau de pupille d'entrée (DOE1) présente un seul vecteur de réseau (V1), l'unité de réseau d'expansion intermédiaire de pupille gauche (DOE2a) présente un seul vecteur de réseau (V2a), l'unité de réseau d'expansion intermédiaire de pupille droit (DOE2b) présente un seul vecteur de réseau (V2b), l'unité de réseau de pupille de sortie gauche (DOE3a) présente un seul vecteur de réseau (V3a), et l'unité de réseau de pupille de sortie droit (DOE3b) présente un seul vecteur de réseau (V3b) ;
dans lequel l'unité de réseau d'expansion intermédiaire de pupille gauche (DOE2a) et l'unité de réseau d'expansion intermédiaire de pupille droit (DOE2b) présentent chacune une pluralité de sous-zones d'expansion intermédiaire de pupille, et les angles entre les frontières de sous-zones d'expansion intermédiaire de pupille adjacentes et une direction horizontale sont différents.

2. Appareil optique (EPE1) selon la revendication 1, dans lequel l'unité de réseau de pupille d'entrée (DOE1) est un réseau relief en surface ou un réseau holographique volumétrique, l'unité de réseau de pupille d'entrée (DOE1) est un cercle, et son diamètre est de 2,5 mm à 7 mm, et la période de réseau de l'unité de réseau de pupille d'entrée (DOE1) est de 330 nm à 450 nm.

3. Appareil optique (EPE1) selon la revendication 2, dans lequel les unités de réseau d'expansion intermédiaire de pupille gauche (DOE2a) et les unités de réseau d'expansion intermédiaire de pupille droit (DOE2b) sont des structures de réseau d'expansion, dans lequel dans une direction s'éloignant horizontalement de l'unité de réseau de pupille d'entrée (DOE1), une hauteur de chacune des structures de réseau d'expansion augmente graduellement dans la direction verticale ; et dans lequel une hauteur maximale de la structure de réseau d'expansion dans la direction verticale étant de 2 à 5 fois le diamètre de l'unité de réseau de pupille d'entrée (DOE1), et une largeur de la structure de réseau d'expansion dans la direction horizontale est de 5 à 10 fois le diamètre de l'unité de réseau de pupille d'entrée (DOE1).

4. Appareil optique (EPE1) selon la revendication 3, dans lequel chacune des structures de réseau d'expansion est divisée en 5 à 15 sous-zones d'expansion intermédiaire de pupille, et un angle entre une ligne de division de sous-zones d'expansion intermédiaire de pupille adjacentes et la direction horizontale est de 20 degrés à 160 degrés ; et dans une direction s'éloignant de l'unité de réseau de pupille d'entrée (DOE1), une efficacité de diffraction de chacune des sous-zones d'expansion intermédiaire de pupille augmente graduellement, et l'efficacité de diffraction de chacune des sous-zones d'expansion intermédiaire de pupille est de 5 % à 95 %.

5. Appareil optique (EPE1) selon la revendication 3, dans lequel l'unité de réseau de pupille de sortie gauche (DOE3a) et l'unité de réseau de pupille de sortie droit (DOE3b) sont des structures de réseau de pupille de sortie, dans lequel les structures de réseau de pupille de sortie sont rectangulaires et présentent des hauteurs dans la direction verticale de 3 à 6 fois le diamètre de l'unité de réseau de pupille d'entrée (DOE1), et des largeurs dans la direction horizontale de 80 % à 95 % des largeurs des structures de réseau d'expansion.

6. Appareil optique (EPE1) selon la revendication 5, dans lequel chacune des structures de réseau de pupille de sortie est divisée en 5 à 15 sous-zones de pupille de sortie dans la direction verticale, et dans une direction s'éloignant verticalement de l'unité de réseau de pupille d'entrée (DOE1), une efficacité de diffraction de chacune des sous-zones de pupille de sortie augmente graduellement, et l'efficacité de diffraction de chacune des sous-zones de pupille de sortie est de 5 % à 95 %.

7. Appareil optique (EPE1) selon la revendication 5, dans lequel les structures de réseau d'expansion sont quadrangulaires, dans lequel les quatre coins de chacune des structures de réseau d'expansion et les quatre coins de chacune des structures de réseau de pupille de sortie sont réalisés sous la forme de structures en arc, et les rayons de courbure des arcs sont de 0 mm à 20 mm.

8. Appareil optique (EPE1) selon l'une quelconque des revendications 1 à 7, dans lequel une distance horizontale allant d'un centre de l'unité de réseau de pupille de sortie gauche (DOE3a) jusqu'à un centre de l'unité de réseau de pupille de sortie droit (DOE3b) est égale à la distance interpupillaire des yeux humains, et la distance interpupillaire est de 60 mm à 70 mm ; dans lequel une distance verticale allant du centre de l'unité de réseau de pupille d'entrée (DOE1) jusqu'au centre de l'unité de réseau de pupille de sortie gauche (DOE3a) est de 8 mm à 25 mm.

9. Appareil optique (EPE1) selon l'une quelconque des revendications 1 à 8, dans lequel, avec une direction allant de gauche à droite considérée comme référence, une direction de vecteur de réseau de l'unité de réseau de pupille d'entrée (DOE1) est de -1 degré à 1 degré, une direction de vecteur de réseau de l'unité de réseau d'expansion intermédiaire de pupille gauche (DOE2a) est de 30 degrés à 60 degrés, une direction de vecteur de réseau de l'unité de réseau d'expansion intermédiaire de pupille droit (DOE2b) est de 120 degrés à 150 degrés, une direction de vecteur de réseau de l'unité de réseau de pupille de sortie gauche (DOE3a) est de 88 degrés à 92 degrés et une direction de vecteur de réseau de l'unité de réseau de pupille de sortie droit (DOE3b) est de 88 degrés à 92 degrés.

10. Appareil optique (EPE1) selon la revendication 9, dans lequel, dans un espace de vecteur d'onde, les zones de vecteur d'onde de la lumière de sortie gauche (OUT1), de la lumière de sortie droite (OUT2) et de la lumière d'entrée (IN1) sont confondues, les zones de vecteur d'onde de la première lumière guidée gauche et de la première lumière guidée droite, et les zones de vecteur d'onde de la deuxième lumière guidée gauche et de la deuxième lumière guidée droite sont toutes deux comprises entre un vecteur d'onde minimal de réflexion interne totale et un vecteur d'onde maximal de réflexion interne totale de la plaque guide d'ondes (SUB01), et les zones de vecteur d'onde de la deuxième lumière guidée gauche et de la deuxième lumière guidée droite sont confondues.

11. Appareil optique (EPE1) selon la revendication 9, dans lequel un vecteur de réseau de l'unité de réseau de pupille d'entrée (DOE1) est dirigé vers la gauche, et une somme des vecteurs de réseau de l'unité de réseau de pupille d'entrée (DOE1), de l'unité de réseau d'expansion intermédiaire de pupille gauche (DOE2a) et de l'unité de réseau de pupille de sortie gauche (DOE3a) est nulle ; et le vecteur de réseau de l'unité de réseau de pupille d'entrée (DOE1) est dirigé vers la droite, et une somme des vecteurs de réseau de l'unité de réseau de pupille d'entrée (DOE1), de l'unité de réseau d'expansion intermédiaire de pupille droit (DOE2b) et de l'unité de réseau de pupille de sortie droit (DOE3b) est nulle.

12. Dispositif d'affichage (500), comprenant un générateur de lumière et l'appareil optique (EPE1) selon l'une quelconque des revendications 1-11, dans lequel le générateur de lumière est configuré pour générer la lumière d'entrée (IN1).
